Europäisches Patentamt

European Patent Office

Office européen des brevets

(19)

(11) Publication number: **0 229 052 B1**

# EUROPEAN PATENT SPECIFICATION

(45) Date of publication of patent specification: **23.10.91**  (51) Int. Cl.⁵: **B23P 19/04**

(21) Application number: **85903484.5**

(22) Date of filing: **12.06.85**

(86) International application number:
**PCT/US85/01115**

(87) International publication number:
**WO 86/07295 (18.12.86 86/27)**

(54) A MECHANISM FOR JOINING TAPE LEADERS.

(43) Date of publication of application:
**22.07.87 Bulletin 87/30**

(45) Publication of the grant of the patent:
**23.10.91 Bulletin 91/43**

(84) Designated Contracting States:
**AT BE CH DE FR GB IT LI LU NL SE**

(56) References cited:
**US-A- 3 706 423**

(73) Proprietor: **DIGITAL EQUIPMENT CORPORA-
TION
146 Main Street
Maynard, MA 01754(US)**

(72) Inventor: **HERTRICH, Friedrich, R.
Sugar Loaf Star Route
Boulder, CO 80302(US)**

(74) Representative: **Mongrédien, André et al
c/o SOCIETE DE PROTECTION DES INVEN-
TIONS 25, rue de Ponthieu
F-75008 Paris(FR)**

## Description

In tape handling devices it is necessary to have a reel which is "taking up," or winding the tape that is coming off the supply reel. Very often, in the prior art, the take up reel and the supply reel are not distinguishable because each acts to either "take up" or "supply" depending on which way the tape is being run. It is also true, in the prior art, that both reels are often located in the same housing, such as a cassette.

However there are some applications in the prior art where the supply reel is provided as an entity unto itself and the tape thereon is pulled therefrom onto an "empty" take up reel. A film on a motion picture projector is a typical example. Other uses of this kind are well known. In the prior art, with such arrangements, there has always been a certain amount of human factor involved. For instance in a motion picture projector arrangement, the film is threaded along a group of sprocketed drivers and idlers. In some other arrangements, the tape is pulled from the supply reel and "grabbed" by a vacuum port on the take up reel. In another arrangement the tape is pulled from the supply reel and hand loaded onto a take up reel whereat there is a sheath. The sheath in response to movement of the take-up reel, operates to squeeze the tape and hold it in position while the tape winds on itself.

In the document US-A-3 706 423, it is described a device for automatically capturing the free end of a take-up leader secured to a take-up reel, at the conclusion of a supply web rewind operation, and for automatically decoupling the supply leader from the captive take-up leader. This device includes a bistable mechanism provided with a toggle member pivotable about a pivot pin, said toggle member including a leader retaining pin for insertion in a retaining slot of the take-up leader. A switch actuator cam is coupled to the toggle, to pivot with the latter.

The present system provides a means for a minimum of human intervention in making ready a system to pull tape from a supply reel onto a take-up reel.

## Summary of the Invention

The present system is involved (in a preferred embodiment) with two tape leaders which in and of themselves are novel. The tape leader from the take-up reel has a tab on its end which (in a preferred embodiment) is substantially mushroom shaped including a stem section. Below the stem section there is located a positioning slot. The tape leader from the supply reel has a locking slot in close proximity to its end. The locking slot is wide enough at one section to pass over the tab and is narrow enough at another section (in the end of the locking slot) so that as the tab is moved into that end, the stem passes through but the tab becomes blocked. The leader per se are the subject of my copending European patent application EP-A1-0228369 (85903483), "Means for Pulling Tape from a Reel".

The mechanism according to the invention is defined by claim 1. More precisely, the mechanism for joining the tape leaders, which is the subject matter of the present application, includes an elongated member which has a finger like protrusion and a cam protrusion at one end thereof. At the other end, the elongated member has a relatively long aperture which is fitted over a stud. The elongated member can rotationally and linearly move about said stud. In addition the elongated member is rotationally coupled to a crank. The crank is in turn rotationally coupled to a cam follower as well as a pivot means. The crank, cam follower and elongated member are arranged so that when the housing, which holds a supply reel, is moved toward the mechanism for joining the tape leaders, it (the housing) bumps into and moves the cam follower. The mechanism operates such that initially the elongated member engages the tape leader from the take up reel and moves the tab to an extended position. Thereafter the locking slot in the supply reel leader passes over the tab as the housing of the supply reel is moved toward the mechanism for joining tape leaders. At this point of the operation the tab is cammed through the slot by the cam protrusion of the elongated member. Subsequently as the housing moves against the cam follower the elongated member moves in a translational fashion to cam the tab into a position so that in response to pulling the take up leader, the take up leader tab becomes locked in the locking slot of the supply tape leader. As the housing for the supply reel is moved further toward its operating position (and continues to move the cam follower) the elongated member is moved so that the finger like protrusion is retracted out of the positioning slot and the cam protrusion is directed away from the locked leaders. Accordingly the take up leader and the supply tape leader are locked, or buckled, for the operation of moving the tape from the supply reel, past a read head, onto the take up reel.

The objects and features of the present invention will be better understood in view of the following description studied in conjunction with the drawings wherein:

Figure 1 depicts the elongated member holding the take up leader prior to locking it in the supply tape leader;

Figure 2 depicts the tab of the take up leader when it is first inserted into the locking slot at the supply tape leader;

Figure 3 depicts the arrangement as the housing of the supply reel moves the cam follower;

Figure 4 depicts the arrangement when the housing of the supply reel reaches its operating position; and

Figures 5A, 5B and 5C depict the take up leader and supply tape leader in succeeding stages of being buckled.

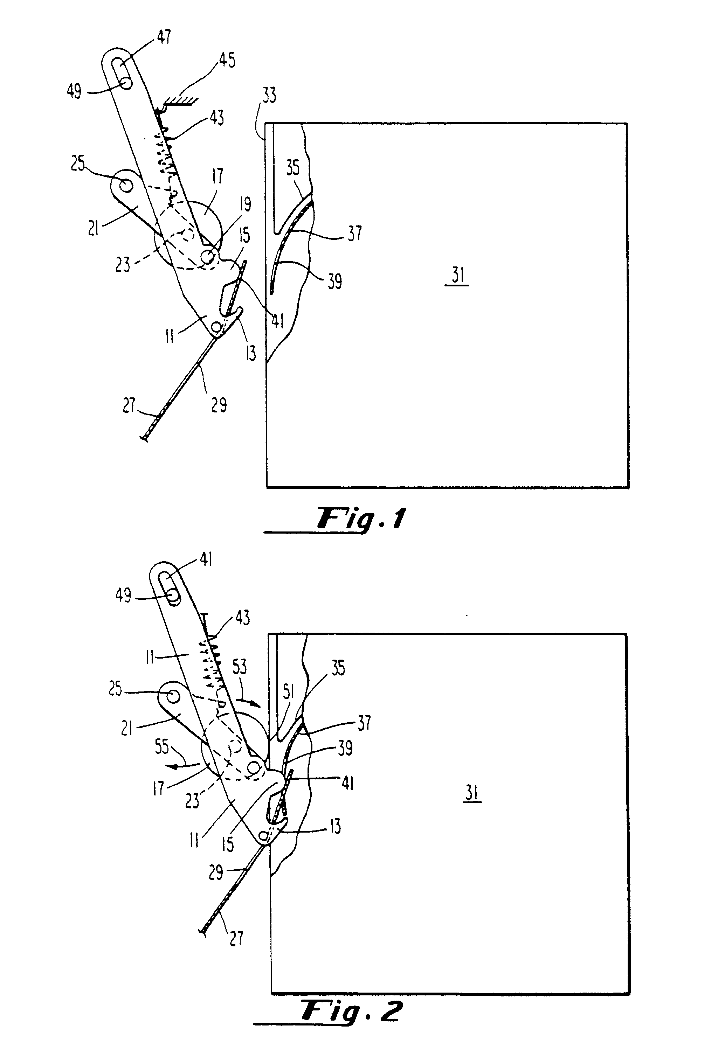

Consider Figure 1. In Figure 1 there is shown an elongated member 11. As can be seen in Figure 1, the lower end of the elongated member 11 is formed into a finger like protrusion 13 and a cam protrusion 15. Also as can be seen in Figure 1, the elongated member 11 is coupled to a crank 21 by a stud 19. The crank 21 is rotationally coupled by a stud 23 to a cam follower 17. The crank 21 is rotationally coupled to a stud 25. As will become apparent, hereinafter, the function of the linkage arrangement (i.e. the crank 21, the cam follower 17 and their rotational coupling design) is to enable the elongated member to first pull the take up reel leader into an extended position for joining with the supply reel leader; secondly cam the tab of the take up leader into the locking slot of the supply tape leader; and thirdly retract the finger like protrusion from the positioning slot of the take up leader and simultaneously move the cam protrusion "out of the way" when the leaders have been joined together. Other forms of mechanical linkage arrangement could be used to maneuver the elongated member so as to accomplish its purpose.

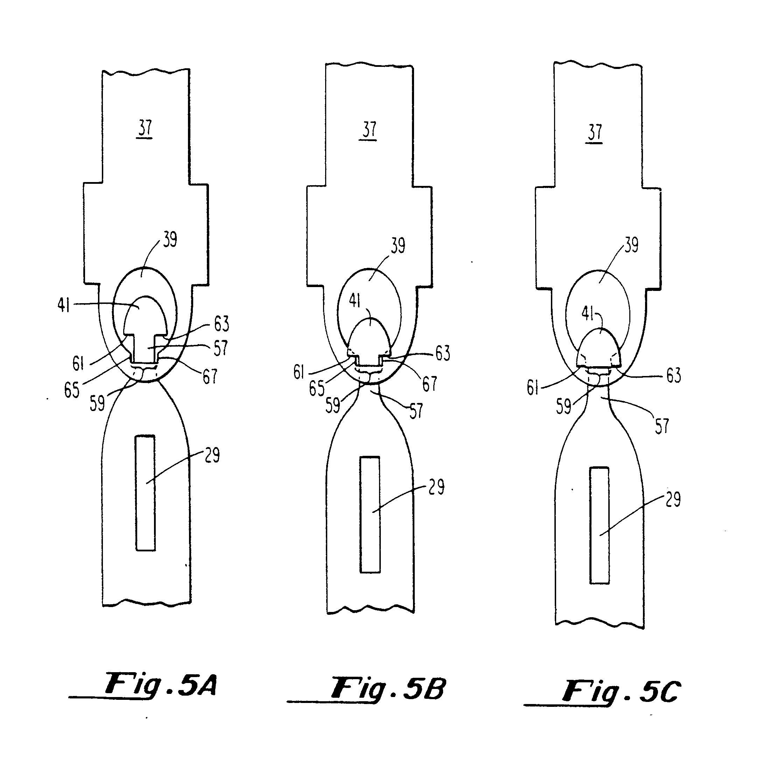

In Figure 1 the take up leader 27 is shown with the finger like protrusion 13 fitted through the positioning slot 29. The positioning slot 29 can be seen in Figures 5 (A, B and C) and is depicted in Figure 1 as a clear section of the leader as opposed to a solid line. Also in Figure 1 a top view of a portion of the housing 31 of the supply reel is shown. It should be understood that the housing 31 is three dimensional extending up from the drawing toward the viewer and that its lower edge 33 serves as a cam. The lower edge 33 moves the cam follower 17 as the housing 31 is moved to the left of the drawing to its ultimate operating position.

The housing 31 moves within two guide rails, not shown, and comes to rest against a bumper means when it is in the correct operating position. The guide rails and the bumper enable the user to quickly insert the cartridge, (i.e. the housing 31 with the supply reel located therein) and to automatically join the two leaders.

As can be seen in Figure 1, the housing 31 has a channel 35 formed therein from whence the supply tape leader 37 extends. The supply tape leader 37 has a locking slot 39 which can be readily seen in Figure 5 (A, B and C) and which is shown as a clear area in Figure 1. It should be understood that (in a preferred embodiment) the leaders 27 and 37 are made of a polyester material with a thickness of approximately $1.016 \times 10^{-5}$ cm to $2.540 \times 10^{-5}$ cm (.004 to .010 mils). Accordingly the leaders are relatively stiff to accommodate the automatic maneuvering of the tab into the locking slot. The tab which has been mentioned above is depicted in Figure 1 as tab 41. The shape of the tab 41 can be better appreciated in Figure 5. While in a preferred embodiment the tab 41 is shown to substantially resemble a mushroom, other shapes could be used.

It should be further noted that the crank 21 is spring loaded by the spring 43 to move the linkage arrangement against the stop stud 45. When the linkage is moved against the stop stud 45 the take up leader 27 is in the correct position to be inserted into the locking slot of the supply tape leader 37. While it is preferable to spring load the mechanism it will operate without spring loading provided the linkage is moved to properly locate the tab 41.

It should be noted that at the top end of the elongated member 11 there is formed an elongated aperture 47. The aperture 47 fits over the stud 49 and such an arrangement permits the elongated member 11 to move both rotationally and linearly, which translational movement is needed to enable the elongated member to cam the tab into the locking slot and at a later time move it "out of the way".

Consider Figure 2. In Figure 2 the housing 31 is shown in a position where its lower edge 33 is about to commence moving, or camming, the cam follower 17. In this initial camming position, the cam protrusion 15 has pushed the tab 41 substantially through the locking slot 39. It should be understood that depending upon the design of the leaders and the wishes of the user, the elongated member 11, the linkage arrangement and in particular the cam protrusion 15 can all be designed to move the tab 41 more or less completely through the locking slot 39. In Figure 2 it can be seen that the lower edge 33 abuts the cam follower 17 at point 51.

As the housing 31 is moved to the left, within its guide rails, it pushes the cam follower 17 which "rolls", as shown by arrow 53, and pivots around the stud 23. In addition the crank 21 commences a slight rotational movement (arrow 55) about the stud 25. The foregoing movement of the linkage causes the cam protrusion 15 to cam or push, the tab 41 further into the locking slot as the locking slot is pushed toward the cam protrusion 15.

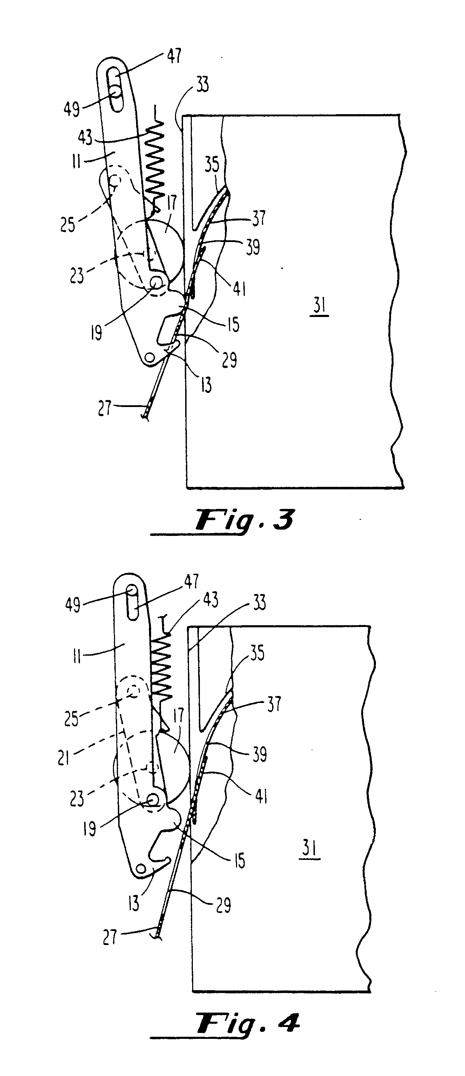

Consider Figure 3. In Figure 3 the housing 31 is shown moved considerably to the left. Under the conditions shown in Figure 3, the housing 31 has not yet gotten to the end of its travel, i.e. into its operating position. However in the intermediate position shown in Figure 3, the tab 41 is shown pushed well into the locking slot 39. As can be determined from Figure 5A when the tab 41 is well into the slot, the stem 57 is located in the narrow section 59 so that as the take up leader 27 is moved away from (in a pulling direction) the supply tape leader 37, the stem 57 will pass through the narrow section 59 but the tab 41 will be blocked. To say it another way, the overlap sections 61 and 63 will abut the outer limits 65 and 67 of the narrow section 59 and the leaders will become buckled. At this point in the buckling procedure the take up leader is pulled toward the bottom of the drawing to cause the stem 57 to pass through the narrow section 59 while the tab becomes blocked. The pulling can be effected by providing power to the take up reel or by manually winding the take up reel.

Consider Figure 4. In Figure 4 the housing 31 is shown having been moved considerably to the left to come into contact with bumper 69. In Figure 4 the housing 31 is shown in its operating position. As can be seen in Figure 4 the elongated member 11 has been moved away from the take up leader. The finger like protrusion 13 has slipped out of the positioning slot 29 and the cam protrusion 15 has moved out of the locking slot 39. As can be further seen in Figure 4 the tape leaders 27 and 37 are joined for operation, that is the pulling of the supply tape from the housing 31 and the taking up thereof by the take up reel.

Figures 5 (A, B, and C) show the take up reel leader 27 being inserted in three steps into the supply tape leader 37. The prerequisites for the leaders 27 and 37 is that they be stiff enough to accommodate the operation described, that one section of the locking slot be wide enough to accept the tab and that another section be narrow enough to pass the stem but block the tab when the take up leader is pulled. These features and their relationship is apparent from Figures 5A, 5B and 5C.

It should be recognized that the joining of the leaders is quite automatic in response to the supply reel housing being inserted into its operating position as described above.

## Claims

1. A mechanism for joining a first tape leader (27) with a second tape leader (37), wherein said first tape leader is formed to have a tab (41) at an end thereof and is further formed to have a positioning slot (29) therein, wherein said second tape leader is formed to have a locking slot (39) therein which locking slot is formed along a first section to be sufficiently wide to permit said tab (41) to pass therethrough and formed at a second section (59) to be sufficiently narrow to prevent said tab from passing therethrough, and wherein said second tape leader (37) is secured to a supply tape reel rotatably positioned within a housing (31), said mecanism comprising in combination : an elongated member (11), a first stud (49) located proximate to one end of said elongated member (11), said elongated member (11) being rotatably mounted at said one end about said stud (49) and linearly movable with respect to said stud, said elongated member (11) having a finger like protrusion (13), said finger like protrusion being positioned proximate to the other end of said elongated member, said elongated member further having a cam protrusion (15) which is positioned proximate to the other end of said elongated member, translational linkage means including a cam follower (17) coupled to said elongated member, and means for moving said housing with respect to said elongated member, said first tape leader (27), and said translational linkage means from a first inactive position to a second active position, wherein said finger like protrusion (13) in response to the movement of said housing from the inactive to active position engages and extends through said positioning slot (29), said translational linkage means in response to movement of the housing from the inactive position to active position moves said elongated member in a first movement whereby, when said locking slot (39) lies opposite said tab, said tab (41) is cammed in said first direction through said locking slot (39) to be ultimately locked in said second section (59) thereof, said cam follower when cammed in a first portion of a second movement said cam protrusion further cams said tab (41) through said locking slot (39), whereby said first tape leader (27), in response to a force pulling it in a direction away from said second tape leader (37) will have said tab locked in said second section (59), and said cam follower when cammed in a second portion of said second movement said cam protrusion (15) is moved away from said tab (41) and said finger like protrusion (13) is retracted out of said positioning slot (29) thereby locking said first tape leader and said second tape leader for pulling thereof and for pulling whatever tape might be connected thereto.

2. A mechanism for joining a first tape leader with a second tape leader according to claim 1, wherein there is included a crank means (21) which is rotationally coupled to a second stud (19) and which is further rotationally coupled to said cam follower (17) whereby when said cam follower is moved it rotationally moves through said crank, around said second stud to in turn move said elongated member (11) out of said positioning slot (29).

3. A mechanism for joining a first tape leader with a second tape leader according to any one of claims 1 and 2 wherein said elongated member (11) is having an elongated aperture (47) at the end thereof which is away from said finger like protrusion (13) and wherein said aperture fits over said first stud (49).

4. A mechanism for joining a first tape leader with a second tape leader according to claim 1, wherein there is included crank means (21) rotationally coupled to said elongated member (11) and rotationally coupled to a second stud (19), and said cam follower (17) is rotationally coupled to said crank means whereby when said cam follower is moved, it rotationally moves said crank means around said second stud and thus said elongated member is moved in said first movement so that when said locking slot lies opposite said tab, said tab is cammed in said first direction through said locking slot to be ultimately locked in said second section thereof.

5. A mechanism for joining a first tape leader with a second tape leader according to claim 1, wherein said first tape leader (27) has opposite to the tab (41) another end secured to a take up reel, said second tape leader (37) having opposite the locking slot another end connected to tape on said supply tape reel within said housing (31), whereby, upon locking said first and second tape leaders together, tape may be transferred between said take up tape reel and said supply tape reel a long a tape path, said mechanism further comprising :

first positioning means (29,13,15) for positioning said first tape leader (27) substantially within the tape path.

6. A mechanism according to claim 5, further comprising a second positioning means (35) for positioning said second tape leader (37) substantially within said tape path in an orientation adapted to promote the passage of said tab (41) through said first section of said locking aperture upon movement of said housing (31) from the inactive to the active position.

7. A mechanism according to claim 6, wherein said second positioning means includes a channel (35) within said housing (31) and shoulders projecting from said second tape leader (37) whereby said shoulders and said channel cooperate in orienting said second tape leader.

8. A mechanism according to claim 7, wherein said first positioning means includes supporting means (29 and 13) for releasably supporting said first tape leader (27).

9. A mechanism according to claim 8, wherein said first positioning means includes said cam protrusion (15) adapted for pushing said tab (41) of said first tape leader through said section of said locking aperture in said second tape leader.

10. A mechanism according to claim 9, wherein said first supporting means (11) releases the first tape leader (27) after said tab of said first tape leader is pushed through said locking aperture.

11. A mechanism according to claim 10, wherein said first supporting means includes said finger like protrusion (13) that extends through said positioning slot (29) in said first tape leader such that said first tape leader is supported thereby.

## Revendications

1. Mécanisme pour raccorder une première amorce (27) de bande à une seconde amorce (37) de bande, dans lequel ladite première amorce de bande présente un onglet (41) à une extrémité, et est en outre percée d'une fente de positionnement (29) ; dans lequel ladite seconde amorce de bande est percée d'une fente de verrouillage (39), laquelle fente de verrouillage est ménagée de manière à être suffisamment large, le long d'une première région, pour permettre audit onglet (41) de la traverser, et de manière à être suffisamment étroite, dans une seconde région (59), pour empêcher ledit onglet de la traverser ; et dans lequel ladite seconde amorce (37) de bande est assujettie à une bobine d'alimentation logée, à rotation, à l'intérieur d'un boîtier (31), ledit mécanisme comprenant, en combinaison : un élément longiligne (11), un premier téton (49) situé à proximité de l'une des extrémités dudit élément longiligne (11), ledit élément longiligne (11) étant monté rotatif autour dudit téton (49), par l'extrémité précitée, et étant mobile linéairement par rapport audit téton, ledit élément longiligne (11) présentant une saillie (13) du type ergot, ladite saillie du type ergot étant située à proximité de l'autre extrémité dudit élément longiligne, ledit élément longiligne comportant par ailleurs une saillie (15) formant came, située à proximité de l'autre extrémité dudit élément longiligne ; un moyen d'articulation translatoire comprenant une contre-came (17) accouplée audit élément longiligne ; et un moyen pour déplacer ledit boîtier par rapport audit élément longiligne, ainsi que ladite première amorce (27) de bande et ledit moyen d'articulation translatoire, d'une première position inactive à une seconde position active, auquel cas ladite saillie (13) du type ergot s'engage dans ladite fente de positionnement (29) et traverse cette dernière en réaction au mouvement dudit boîtier, de la position inactive à la position active, ledit moyen d'articulation translatoire imprime un premier mouvement audit élément longiligne, en réaction au mouvement du boîtier de la position inactive à la position active, par lequel lorsque ladite fente de verrouillage (39) se trouve en face dudit onglet, ledit onglet (41) est engagé à travers ladite fente de verrouillage (39), dans ladite première direction, pour être finalement verrouillé dans ladite seconde région (59) de ladite fente, lorsque ladite çontre-came est sollicitée dans une première phase d'un second mouvement, ladite saillie formant came engage davantage ledit onglet (41) à travers ladite fente de verrouillage (39), de sorte que ladite première amorce (27) de bande, en réaction à une force la tirant à l'écart de ladite seconde amorce (37) de bande, est assurément verrouillée par son onglet dans ladite seconde région (59), et, lorsque ladite contre-came est sollicitée dans une seconde phase dudit second mouvement, ladite saillie (15) formant came est déplacée à l'écart dudit onglet (41) et ladite saillie (13) du type ergot est rétractée hors de ladite fente de positionnement (29), verrouillant ainsi ladite première amorce de bande et ladite seconde amorce de bande en vue de leur traction, et en vue de tirer une quelconque bande susceptible d'y être raccordée.

2. Mécanisme pour raccorder une première amorce de bande à une seconde amorce de bande, selon la revendication 1, dans lequel se trouve un moyen formant biellette (21) qui est accouplé en rotation à un deuxième tourillon (19), et est par ailleurs accouplé en rotation à ladite contre-came (17), de sorte que, lorsqu'un mouvement est imprimé à ladite contre-came, elle est animée d'une rotation par l'intermédiaire de ladite biellette, autour dudit deuxième tourillon, pour déplacer à son tour ledit élément longiligne (11) hors de ladite fente de positionnement (29).

3. Mécanisme pour raccorder une première amorce de bande à une seconde amorce de bande, selon l'une quelconque des revendications 1 et 2, dans lequel ledit élément longiligne (11) présente une boutonnière allongée (47) à son extrémité qui est tournée à l'opposé de ladite saillie (13) du type ergot ; et dans lequel ladite boutonnière coiffe ledit premier téton (49).

4. Mécanisme pour raccorder une première amorce de bande à une seconde amorce de bande, selon la revendication 1, dans lequel se trouve un moyen formant biellette (21) accouplé en rotation audit élément longiligne (11) et accouplé en rotation à un deuxième tourillon (19), et ladite contre-came (17) est accouplée en rotation audit moyen formant biellette, de sorte que, lorsque ladite contre-came est animée d'un mouvement, elle imprime une rotation audit moyen formant biellette, autour dudit deuxième tourillon, et ledit élément longiligne est par conséquent animé dudit premier mouvement, si bien que, lorsque ladite fente de verrouillage se trouve en face dudit onglet, ledit onglet est engagé à travers ladite fente de verrouillage, dans ladite première direction, pour être finalement verrouillé dans ladite seconde région de cette fente.

5. Mécanisme pour raccorder une première amorce de bande à une seconde amorce de bande, selon la revendication 1, dans lequel ladite première amorce (27) de bande présente, à l'opposé de l'onglet (41), une autre extrémité assujettie à une bobine de prélèvement, ladite seconde amorce (37) de bande présentant, à l'opposé de la fente de verrouillage, une autre extrémité reliée à une bande enroulée sur ladite bobine d'alimentation logée à l'intérieur dudit boîtier (31), de sorte que, lors du verrouillage interactif desdites première et seconde amorces de bandes, une bande peut être transférée entre ladite bobine de prélèvement et ladite bobine d'alimentation, le long d'un trajet de défilement, ledit mécanisme comprenant par ailleurs :
   des premiers moyens de positionnement (29, 13, 15) pour positionner sensiblement ladite première amorce (27) de bande dans les limites du trajet de défilement de la bande.

6. Mécanisme selon la revendication 5, compre-

nant en outre un second moyen de positionnement (35) pour positionner sensiblement ladite seconde amorce (37) de bande, dans les limites dudit trajet de défilement, selon une orientation propre à favoriser le passage dudit onglet (41), à travers ladite première région de ladite fente de verrouillage, lors d'un mouvement dudit boitier (31) de la position inactive à la position active.

7. Mécanisme selon la revendication 6, dans lequel ledit second moyen de positionnement comprend un canal (35) pratiqué dans ledit boîtier (31), et des épaulements saillant au-delà de ladite seconde amorce (37) de bande, lesdits épaulements et ledit canal coopérant pour orienter ladite seconde amorce de bande.

8. Mécanisme selon la revendication 7, dans lequel ledit premier moyen de positionnement présente des moyens de support (29 et 13), en vue de supporter ladite première amorce (27) de bande de manière libérable.

9. Mécanisme selon la revendication 8, dans lequel ledit premier moyen de positionnement comprend ladite saillie (15) formant came, destinée à pousser ledit onglet (41) de ladite première amorce de bande à travers ladite région de ladite fente de verrouillage de ladite seconde amorce de bande.

10. Mécanisme selon la revendication 9, dans lequel ledit premier moyen de support (11) libère la première amorce (27) de bande après que ledit onglet de ladite première amorce de bande a été poussé à travers ladite fente de verrouillage.

11. Mécanisme selon la revendication 10, dans lequel ledit premier moyen de support comprend ladite saillie (13) du type ergot qui s'étend à travers ladite fente de positionnement (29), pratiquée dans ladite première amorce de bande, de telle sorte que ladite première amorce de bande soit supportée par ladite saillie.

**Patentansprüche**

1. Anordnung zum Verbindung eines ersten Bandführers (27) mit einem zweiten Bandführer (37), wobei der erste Bandführer ein Endstück (41) und einen Positionierungsschlitz (29) aufweist, wobei der zweite Bandführer einen Einhängeschlitz (39) aufweist, der entlang einem ersten Abschnitt ausgebildet und ausreichend breit ist, um einen Durchtritt des Endstücks (41) zu ermöglichen und in einem zweiten Abschnitt (59) ausreichend schmal ist, um einen Durchtritt des Endstücks zu verhindern, und wobei der zweite Bandführer (37) an einer Bandzuführspule befestigt ist, die drehbar in einem Gehäuse (31) positioniert ist, welche Anordnung die Kombinationsmerkmale aufweist: Ein längliches Glied (11), ein erster Stift (49), der in der Nähe eines Endes des länglichen Glieds (11) vorgesehen ist, welches längliche Glied (11) am einen Ende drehbar um den Stift (49) und linear beweglich relativ zu dem Stift angeordnet ist, welches längliche Glied (11) einen fingerförmigen Vorsprung (13) aufweist, der in der Nähe des anderen Endes des länglichen Glieds angeordnet ist, welches längliche Glied ferner einen Nockenvorsprung (15) aufweist, der in der Nähe des anderen Endes des länglichen Glieds angeordnet ist, ein mit dem länglichen Glied verbundenes Translationsgestänge mit einem Kurvenabgriff (17), sowie eine Einrichtung zum Bewegen des Gehäuses relativ zu dem länglichen Glied, dem ersten Bandführer (27) und dem Translationsgestänge aus einer ersten nicht aktiven Lage in eine zweite aktive Lage, wobei der fingerförmige Vorsprung (13) in Abhängigkeit von der Bewegung des Gehäuses aus der nicht aktiven in die aktive Lage in den Positionierungsschlitz (29) eingreift und sich durch diesen erstreckt, welches Translationsgestänge in Abhängigkeit von der Bewegung des Gehäuses aus der nicht aktiven Lage in die aktive Lage das längliche Glied in einer ersten Bewegung bewegt, wodurch - wenn die Einhängeöffnung (39) gegenüber dem Endstück liegt - das Endstück (41) in der ersten Richtung durch die Einhängeöffnung (39) bewegt wird, um schließlich in dem zweiten Abschnitt (59) davon arretiert zu werden, wobei bei einer Bewegung des Kurvenabgriffs entlang einem ersten Teil einer zweiten Bewegung der Nockenvorsprung weiter das Endstück (41) durch die Einhängeöffnung (39) bewegt, wodurch der erste Bandführer (27) in Abhängigkeit von einer Kraft, durch die dieser in einer Richtung weg von dem zweiten Bandführer (37) gezogen wird, das Endstück in dem zweiten Abschnitt (59) arretiert, und wobei bei einer Bewegung des Kurvenabgriffs entlang einem zweiten Teil der zweiten Bewegung der Nockenvorsprung (15) weg von dem Endstück (41) bewegt wird und der fingerförmige Vorsprung (13) aus dem Positionierungsschlitz (29) zurückgezogen wird, wodurch der erste Bandführer und der zweite Bandführer gesichert aneinander befestigt sind, um ein Abziehen zu ermöglichen, wobei auch irgendein damit verbundenes Band

abgezogen werden kann.

2. Anordnung nach Anspruch 1, **dadurch gekennzeichnet**, daß eine Kurbeleinrichtung (21) vorgesehen ist, die drehbar mit einem zweiten Stift (19) verbunden sit und ferner drehbar mit dem Kurvenabgriff (17) verbunden ist, wodurch bei einer Bewegung des Kurvenabgriffs dieser durch die Kurbel um den zweiten Stift bewegt wird, um das längliche Glied (11) aus dem Positionierungsschlitz (29) zu bewegen.

3. Anordnung nach Anspruch 1 oder 2, **dadurch gekennzeichnet**, daß das längliche Glied (11) an seinem dem fingerförmigen Vorsprung (13) gegenüberliegenden Ende eine längliche Öffnung (47) aufweist, und daß in dieser Öffnung der erste Stift (49) passend vorgesehen ist.

4. Anordnung nach Anspruch 1, **dadurch gekennzeichnet,** daß eine Kurbeleinrichtung (21) drehbar mit dem länglichen Glied (11) verbunden und drehbar mit einem zweiten Stift (19) verbunden ist, und daß der Kurvenabgriff (17) drehbar mit der Kurbeleinrichtung verbunden ist, wodurch bei einer Bewegung des Kurvenabgriffs die Kurbel einrichtung um den zweiten Stift bewegt wird, derart daß das längliche Glied bei der ersten Bewegung bewegt wird und - wenn die Einhängeöffnung gegenüber dem Endstück liegt - das Endstück in der ersten Richtung durch die Einhängeöffnung bewegt wird, um schließlich in dem zweiten Abschnitt davon gesichert befestigt zu sein.

5. Anordnung nach Anspruch 1, **dadurch gekennzeichnet**, daß der erste Bandführer (27) an dem dem Endstück (41) gegenüberliegenden Ende einen an einer Aufnahmespule befestigten Endteil aufweist, daß der zweite Bandführer (37) gegenüber der Einhängeöffnung einen mit dem Band auf der Zuführspule in dem Gehäuse (31) verbundenen Endteil aufweist wodurch nach einer gesicherten Verbindung des ersten mit dem zweiten Bandführer das Band zwischen der Aufnahmespule und der Zuführspule entlang einer Bahn transportiert werden kann, welche Anordnung eine erste Positionierungseinrichtung (29,13,15) zur Anordnung des ersten Bandführers (27) im wesentlichen innerhalb der Bahn des Bands aufweist.

6. Anordnung nach Anspruch 5, **dadurch gekennzeichnet**, daß eine zweite Positionierungseinrichtung (35) zum Positionieren des zweiten Bandführers (37) im wesentlichen innerhalb der Bahn des Bands in einer Orientierung vorgesehen ist, die eine Begünstigung des Durchtritts des Endstücks (41) durch den ersten Abschnitt der Einhängeöffnung nach einer Bewegung des Gehäuses (31) aus der nicht aktiven in die aktive Lage ermöglicht.

7. Anordnung nach Anspruch 6, **dadurch gekennzeichnet**, daß die zweite Positionierungseinrichtung einen Kanal (35) in dem Gehäuse (31) und von dem zweiten Bandführer (37) vorspringende Schultern aufweist, wodurch die Schultern und der Kanal zusammenarbeiten, um den zweiten Bandführer zu orientieren.

8. Anordnung nach Anspruch 7, **dadurch gekennzeichnet**, daß die erste Positionierungseinrichtung eine Stützeinrichtung (29, 13) zum freigebbaren Abstützen des ersten Bandführers (27) aufweist.

9. Anordnung nach Anspruch 8, **dadurch gekennzeichnet**, daß die erste Positionierungseinrichtung den Nockenvorsprung (15) enthält, der zum Durchschieben des Endstücks (41) des ersten Bandführers durch den Abschnitt der Einhängeöffnung in dem zweiten Bandführer geeignet ist.

10. Anordnung nach Anspruch 9, **dadurch gekennzeichnet**, daß die erste Stützeinrichtung (11) den ersten Bandführer (27) freigibt, nachdem das Endstück des ersten Bandführers durch die Einhängeöffnung durchgeschoben ist.

11. Anordnung nach Anspruch 10, **dadurch gekennzeichnet**, daß die erste Stützeinrichtung den fingerförmigen Vorsprung (13) enthält, der sich durch den Positionierungsschlitz (29) in dem ersten Bandführer derart erstreckt, daß der erste Bandführer dadurch abgestützt wird.

_**Fig.1**_

_**Fig.2**_

**_Fig. 3_**

**_Fig. 4_**

_Fig.5A_   _Fig.5B_   _Fig.5C_